# EUROPEAN PATENT SPECIFICATION

(11) **EP 2 095 672 B1**
(45) Date of publication and mention of the grant of the patent: **02.06.2010**
(21) Application number: 07822516.6
(22) Date of filing: 13.11.2007
(51) Int. Cl.: H04W 48/18

(54) **EFFICIENT PLMN SEARCH ORDER**
EFFIZIENTE PLMN-SUCHREIHENFOLGE
ORDRE DE RECHERCHE EFFICACE DE RÉSEAU MOBILE TERRESTRE PUBLIC

(30) Priority: 22.12.2006 US 615162
(43) Date of publication of application: 02.09.2009
(73) Proprietor: Telefonaktiebolaget LM Ericsson (publ), 164 83 Stockholm (SE)
(72) Inventor: RAMKULL, Joachim, 224 60 Lund (SE); KARLSSON, Magnus, 224 72 Lund (SE); CHRISTOFFERSSON, Christian, 231 75 Beddingestrand (SE)
(74) Representative: Bratt, Hanna Catharina
(86) International application number: PCT/EP2007/062240
(87) International publication number: WO 2008/077682

(56) References cited:
- EP-A1- 1 422 962
- WO-A-03/092313
- US-A1- 2003 148 786
- US-B1- 6 343 070

## Description

### BACKGROUND

This invention relates to communication systems and more particularly to mobile communication systems.

With the increasing number of frequencies available for communication in mobile communication systems, an increasing amount of time is needed for a user equipment (UE), such as a mobile phone or other remote terminal, to search for cells and public land mobile networks (PLMNs) during power-up and loss-of-service scenarios, for example.

Mobile communication systems include time-division multiple access (TDMA) systems, such as cellular radio telephone systems that comply with the GSM telecommunication standard and its enhancements like GSM/EDGE, and code-division multiple access (CDMA) systems, such as cellular radio telephone systems that comply with the IS-95, cdma2000, and wideband CDMA (WCDMA) telecommunication standards. Digital communication systems also include "blended" TDMA and CDMA systems, such as cellular radio telephone systems that comply with the universal mobile telecommunications system (UMTS) standard, which specifies a third generation (3G) mobile system being developed by the European Telecommunications Standards Institute within the International Telecommunication Union's IMT-2000 framework. The Third Generation Partnership Project (3GPP) promulgates the UMTS and WCDMA standards.

3G mobile communication systems based on WCDMA as the radio access technology (RAT) are being deployed all over the world. High-speed downlink packet access (HSDPA) is an evolution of WCDMA that provides higher bit rates by using higher order modulation, multiple spreading codes, and downlink-channel feedback information. Another evolution of WCDMA is Enhanced Uplink (EUL), or High-Speed Uplink Packet Access (HSUPA), that enables high-rate packet data to be sent in the reverse, or uplink, direction. New RATs are being considered for evolved-3G and fourth generation (4G) communication systems, although the structure of and functions carried out in such systems will generally be similar to those of earlier systems. In particular, orthogonal frequency division multiplexing is under consideration for evolved-3G and 4G systems.

This application focusses on WCDMA and GSM radio access technologies for simplicity, but it will be understood that the principles described in this application can be implemented in communication systems employing other RATs.

A cell belongs to a PLMN, and cell/PLMN selection has a number of objectives, which include connecting a UE to the cell(s)/PLMN(s) that will provide the highest quality of service (QoS), enable the UE to consume the least power, and/or generate the least interference. Cell/PLMN selection is usually based on the signal strength (signal to interference ratio (SIR) or signal to noise ratio (SNR)) of candidate cells. For example, U.S. Patent Application No. 11/289,001 filed on November 29, 2005, by B. Lindoff for "Cell Selection in High-Speed Downlink Packet Access Communication Systems" describes a cell selection process that takes into account the delay spread of the communication channel. U.S. Patent Application Publication No. US 2002/0119774 for "Method for PLMN Selection" by Johannesson et al. describes how a UE receives a list of data associated with networks neighboring the PLMN currently serving the UE from a base station (BS) of the PLMN currently serving the UE. A new PLMN to serve the UE can be selected based upon the list. U.S. Patent Application Publication No. US 2004/0224689 for "Method for a Radiotelephone to Scan for Higher Priority Public Land Mobile Network" by Raghuram et al. describes how a radiotelephone can scan for available frequencies that are in use and supported by higher priority PLMNs and the radiotelephone. US Patent Publication No 6343070 B1 for "Methods for reducing channel acquisition times in a radio telephone communications system and related mobile terminals" by Klas et al. describes how the search can be prioritized by the most recently acquired channels.

For 3GPP-compliant mobile communication systems, the PLMN selection process is specified in Section 4.4 of 3GPP Technical Specification (TS) 23.122, Non-Access-Stratum (NAS) functions related to Mobile Station (MS) in idle mode (Release 7), V7.5.0 (June 2006). At switch on, or following recovery from lack of coverage, the UE typically selects the registered PLMN (RPLMN) or equivalent PLMN (if it is available) using all access technologies that the UE is capable of. In general, the RPLMN is the PLMN on which certain location registration outcomes have occurred for the UE. If successful registration is achieved, the UE indicates the selected PLMN. If there is no RPLMN, or if registration is not possible, the UE follows either an automatic or a manual specified selection procedure, depending on its operating mode.

Today the same geographic area is often be served by two or more different RATS, e.g., WCDMA and GSM. Only a subset of the frequency bands supported by a RAT is typically used in a given geographic area, and one or more of the frequency bands of different RATs may overlap.

Thus, selecting a RPLMN and searching using all access technologies that the UE is capable of can be inefficient. In some current UE implementations, a RAT device searches all frequency bands supported by a first RAT, e.g., WCDMA, and then switches to a second RAT, e.g., GSM, and searches again if nothing is found in the first search. In such a linear search of all frequency bands of a RAT, the UE may waste time searching for cells/PLMNs in frequency bands that may not be valid when cells/PLMNs can be more readily found in a frequency band of the other RAT.

### SUMMARY

In accordance with aspects of this invention, there is provided a method in a UE of searching for a cell in a PLMN that includes the steps of searching for a cell in a most recently used frequency group of a RAT; and if a cell is not found in the most recently used frequency group of the first RAT, switching to a second RAT and searching for a cell in a most recently used frequency group of the second RAT.

In accordance with further aspects of this invention, there is provided a UE for a communication system that includes means for selecting a RAT to use for communicating with the communication system from at least two RATs; and means for searching for a cell of the communication system using the selected RAT, wherein the searching means searches for a cell in a most recently used frequency group of a first RAT; and if a cell is not found in the most recently used frequency group of the first RAT, the searching means switches to a second RAT and searches for a cell in a most recently used frequency group of the second RAT.

In accordance with further aspects of this invention, there is provided a computer-readable medium having stored thereon instructions which, when executed by a processor, cause the processor to perform a method of selecting a cell in a PLMN. The method includes searching for a cell in a most recently used frequency group of a first RAT; and if a cell is not found in the most recently used frequency group of the first RAT, switching to a second RAT and searching for a cell a most recently used frequency group of the second RAT.

### BRIEF DESCRIPTION OF THE DRAWINGS

The various objects, features, and advantages of this invention will be understood by reading this description in conjunction with the drawings, in which:
FIG. 1 is a diagram of an exemplary communication network;
FIG. 2 depicts a public land mobile network (PLMN);
FIG. 3 is a block diagram of a user equipment;
FIG. 4 is a flow chart of an improved method of cell/PLMN search;
FIGs. 5A, 5B, and 5C show an example of a time needed to find a cell/PLMN using a conventional method of cell search; and
FIGs. 6A, 6B, and 6C show an example of a time needed to find a cell with an improved method of cell search.

### DETAILED DESCRIPTION

By employing an intelligent search order, a UE can shorten the time needed to find a cell, such as a suitable or acceptable cell. It will be understood by the artisan that a "suitable" cell offers the UE normal service and that an "acceptable" cell offers the UE something less than normal service, e.g., emergency-only calls. After a first cell has been found, a UE can determine which group(s) of frequencies it will be worthwhile to search when another search is needed for a second cell/PLMN. The UE can thus avoid wasting time searching for cells in groups of frequencies of a RAT that may not be valid when cells can be found in a most recently used group of another RAT. A group of frequencies may be a Band Group (BG), which is simply a group that is treated as a unit from a cell/PLMN selection point of view. A typical characteristic of a BG is that the included frequencies are deployed in the same geographical area. Examples of BGs are GSM 900 / GSM1800 and GSM 850 /GSM 1900, respectively. The "most recently used group" is simply the frequency group in which a suitable cell was last found, e.g., the frequency group of the last RPLMN. The UE may maintain a list of recently used frequencies, e.g., a list of the last two or three bands in which cells were found, as such a list can be useful for prioritization when remaining frequencies are to be searched.

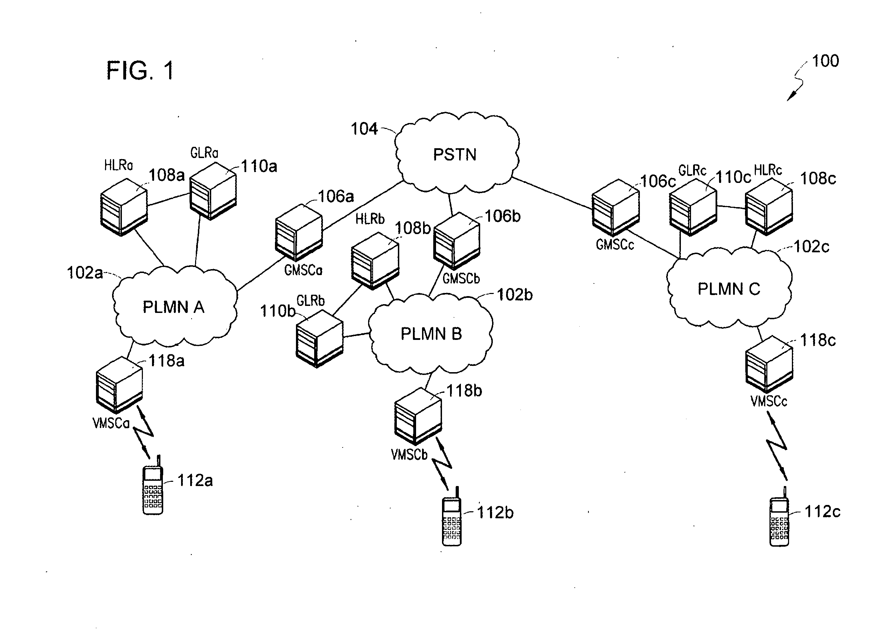

FIG. 1 is a diagram of an exemplary mobile communication system 100 that includes a plurality of PLMNs 102a, 102b, 102c. It will be recognized that FIG. 1 depicts the PLMNs 102 as non-overlapping, but this is done only for clarity; in general, PLMNs can overlap to varying geographical extents. A conventional public switched telephone network (PSTN) 104 interfaces with the PLMNs through respective gateway mobile services switching centers (GMSCs) 106a, 106b, 106c. The PLMNs 102a, 102b, 102c have respective home location registers (HLRs) 108a, 108b,108c and gateway location registers (GLRs) 110a, 110b, 110c. The HLRs maintain subscription data and keep track of the current locations of user equipments (UEs), such as mobile telephones or terminals, of the PLMNs' mobile subscribers, such as the UEs 112a, 112b, 112c. Each GLR maintains subscription data of mobile subscribers associated with other networks, i.e., UEs that are "visiting" the respective PLMN.

For clarity, if the UE 112a subscribes to the PLMN 102a, the PLMN 102a is called the "home PLMN" of the UE 112a; in general, a home PLMN is a PLMN where the mobile country code (MCC) and mobile network code (MNC) of the PLMN identify are the same as the MCC and MNC of the UE. If the UE 112 roams to another PLMN 102b, 102c, then those PLMNs are called VPLMNs. A PLMN that provides services to a UE is called the UE's "serving PLMN", and occasionally the UEs initiate location registration procedures with respective VPLMN's visited mobile switching centers (VMSCs) 118a, 118b, 118c. The VMSCs inform the HLRs through the GLRs of the locations of the roaming mobile subscribers. For example, as UE 112a travels into the geographic area serviced by PLMN 102b, it registers with VMSC 118b and GLR 110b, which inform HLR 108a of the current location of UE 112a.

The artisan will understand that the components and arrangement depicted in FIG. 1 are examples and should not be construed as limiting the components and arrangement of an actual communication system.

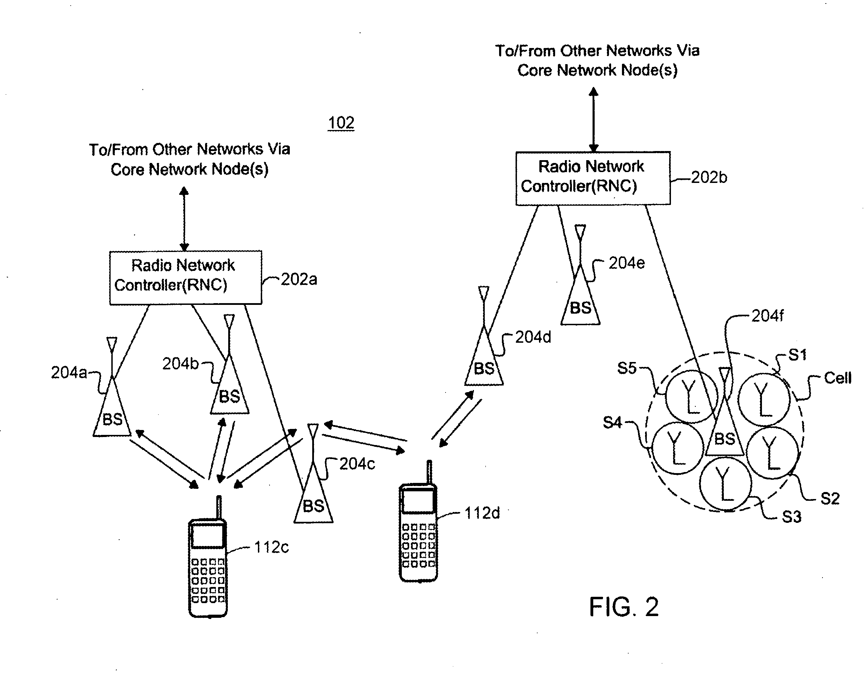

Each PLMN usually includes a respective number of base stations (not shown in FIG. 1) that are capable of communicating with the UEs. FIG. 2 depicts a PLMN 102, which may be, for example, a WCDMA communication system. Radio network controllers (RNCs) 202a, 202b control various radio network functions, including for example radio access bearer setup, diversity handover, etc. More generally, each RNC directs UE calls via the appropriate BSs, which communicate with UEs 112c, 112d through downlink (i.e., base-to-mobile, or forward) and uplink (i.e., mobile-to-base, or reverse) channels. RNC 202a is shown coupled to BSs 204a, 204b, 204c, and RNC 202b is shown coupled to BSs 204d, 204e, 204f. Each BS, which is called a Node B in 3GPP parlance, serves a geographical area that can be divided into one or more cell(s). BS 204f is shown as having five antenna sectors S1-S5, all or some of which can be said to make up the cell of the BS 204f. The BSs are coupled to their corresponding RNCs by dedicated telephone lines, optical fiber links, microwave links, etc. As described above, both RNCs 202a, 202b are connected with external networks such as the PSTN, the Internet, etc. through one or more core network nodes, such as an MSC and/or a packet radio service node (not shown).

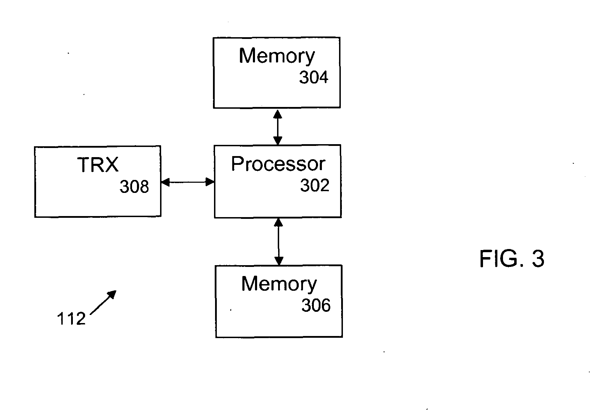

FIG. 3 depicts a UE 112 that communicates through a wireless link with a BS 204 of a PLMN 102. The UE determines what type of radio carrier, or RAT (e.g., UMTS, including GSM and WCDMA, GSM COMPACT, etc.), to search for when attempting to select a specific PLMN. Information transmitted from the BS 204 to the UE 112 enables the UE 112 to select the PLMN and may be stored in a suitable memory or memories in the UE 112. The information may either be transmitted by the BS 204 on a suitable broadcast channel or selectively transmitted to the UE 112, for example, during registration of the UE with the serving PLMN. In addition to the identity of neighboring PLMNs, the information may include identification of neighboring cells of the current serving cell (within the same PLMN), and RAT information.

Among other things, the UE 112 includes one or more programmable processors 302 or suitable logic that processes information stored in one or more memories 304, 306. As explained in more detail below, the stored information may include system information, e.g. RAT, of one or more cells and lists of available and neighboring PLMNs and most recently used frequency groups, such as BGs, which a processor 302 can use in determining and selecting cells/PLMNs in accordance with the features of this invention. It will be appreciated that the processor 302 typically includes timers, etc. that facilitate its operations. Transceiver (TRX) circuitry 308 provides for the reception and transmission of control and traffic signals on the link between the UE 112 and the BS 204, and is controlled by the processor 302. Similarly suitable transceiver circuitry is provided in the BS 204.

The conventional PLMN selection procedure carried out in a UE, e.g., by the processor 302, involves scanning for available PLMNs; selecting the highest prioritized available PLMN; and searching for and selecting a suitable cell in the selected PLMN. As noted above, the searching typically includes all BGs in the selected PLMN, which after a power-on or loss-of-service, is usually the last RPLMN. If a suitable cell/PLMN is not found, the UE starts the selection procedure anew, scanning for available PLMNs.

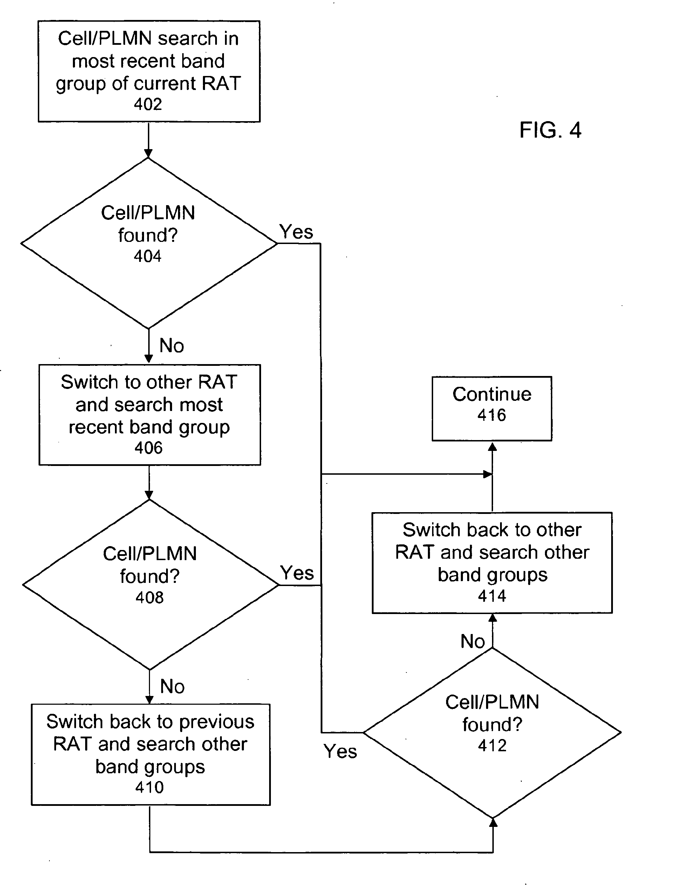

In accordance with features of this invention, the conventional cell/PLMN search procedure is modified as described below and as depicted by the flow chart of FIG. 4. In step 402, a search for a cell/PLMN is conducted in the most recently used frequency group, e.g., BG, of the UE's currently active RAT. As described above, this BG and RAT may be those indicated by information stored in the UE, e.g., as the result of a power-down or before a loss of service. If a cell/PLMN is not found in the most recently used BG of a current active RAT, e.g., RAT A, (No in step 404), the UE switches to another RAT that the UE can handle, e.g., RAT B, and searches for a cell/PLMN in the most recently used BG of RAT B (step 406) rather than searching the other BGs of RAT A. If no cell/PLMN is found in the most recently used BG of RAT B (no in step 408), the UE switches back to RAT A and searches for a cell/PLMN in remaining BGs of RAT A (step 410). If a cell/PLMN is still not found (No in step 412), the UE switches back to RAT B and searches for a cell/PLMN in remaining BGs of RAT B (step 414). The remaining BGs in RAT A or B may be searched in various ways, such as by searching the next most recently used BGs. Successful searches (Yes in steps 404, 408, or 412) and the fall-back search in step 414 result in the UE's continuing its standard operations (step 416).

It should be understood that the example described in the preceding paragraph involves two RATs, but that is done only for simplicity of explanation. There could be more than two most recently used RATs, e.g., a RAT C (say, 4G, IEEE 802.11, or IEEE 802.16), in the example, in which case more complicated search orders could be used. For example, the several most recently used RATs could be searched based on user, UE, system operator, or other preferences.

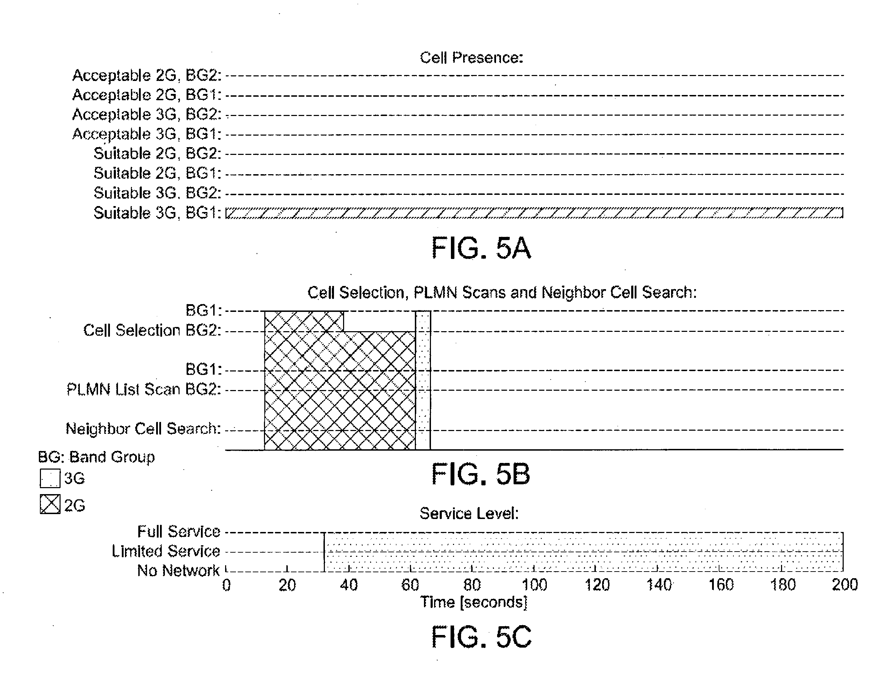

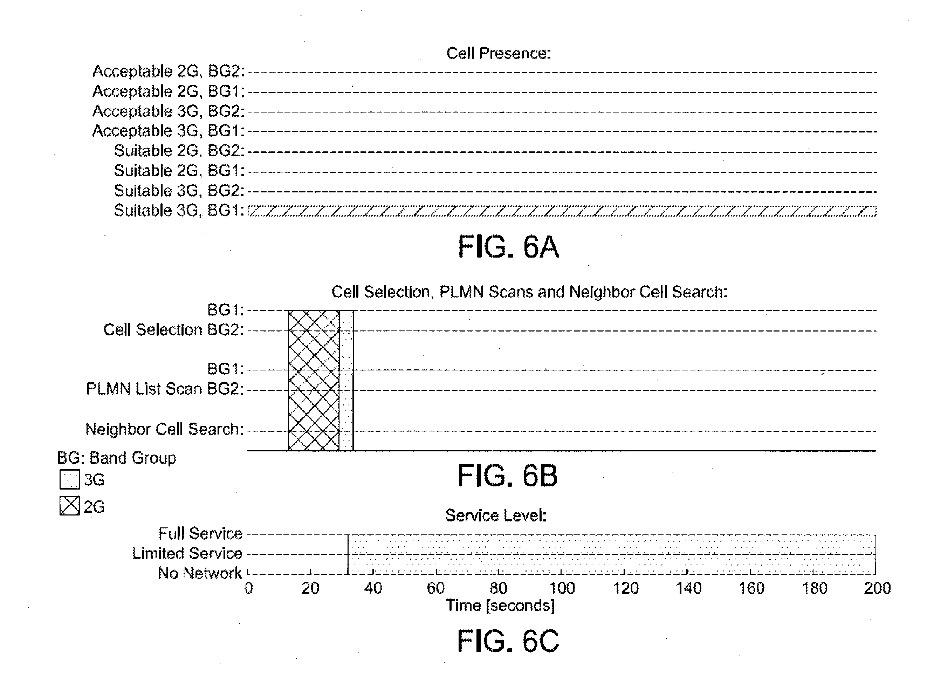

The above-described behaviors are illustrated in FIGs. 5 and 6. FIG. 5 shows an example of a cell search using a conventional linear search strategy, with FIG. 5A indicating cell presence (acceptable or suitable, 2G or 3G), FIG. 5B indicating cell selection activity, and FIG. 5C indicating service level (full, limited, or none) over time. In FIG. 5, cross-hatching relates to 2G cells and stippling relates to 3G cells, and the horizontal time axes of FIGs. 5A and 5C are of the same scale and aligned. The horizontal time axis of FIG. 5B is expanded for clarity. The UE is assumed to have been registered to a cell of a first RAT, e.g., a GSM cell, when the UE was last powered off. When the UE is powered back on (indicated by Time 0 on the horizontal axis), there are no acceptable or suitable 2G (e.g., GSM) cells present, but there is a cell of a second RAT available, e.g., a WCDMA BG 1 cell (indicated by the hatched bar in FIG. 5A).

In the conventional way, the UE starts searching for cells within GSM BG 1 (i.e., 900 MHz/1800 MHz) and then continues with GSM BG 2 (850 MHz/1900 MHz). This searching (indicated by the cross-hatched area in FIG. 5B) involves cell selection, PLMN list scan, and neighbor cell search procedures as indicated in the figure. The searches of the two 2G BGs are unsuccessful, and so after about 30 seconds the UE searches WCDMA BG 1 (indicated by the stippled bar in FIG. 5B) and finds the available WCDMA cell. Thereafter, full communication services are available to the UE, as indicated by the stippled area in FIG. 5C. All of the searching in the conventional way requires about thirty seconds in the scenario depicted in FIG. 5.

FIG. 6 illustrates the behavior of the improved cell/PLMN search method for the same scenario as FIG. 5, i.e., when a cell in the most recently used RAT (viz., the RPLMN), is not available. FIG. 6A indicates cell presence (acceptable or suitable, 2G or 3G), FIG. 6B indicates cell selection activity, and FIG. 6C indicates service level (full, limited, or none) over time. In FIG. 6, cross-hatching relates to 2G cells and stippling relates to 3G cells, and the horizontal time axes of FIGs. 6A and 6C are of the same scale and aligned. The horizontal time axis of FIG. 6B is expanded for clarity.

Again, the UE is assumed to have been registered in a GSM cell when last powered down. When powered up, the UE again starts searching for cells within GSM BG 1 (indicated by the cross-hatched area in FIG. 6B), but then after only about 15 seconds, the UE changes RAT in order to search for a cell in WCDMA BG 1 (indicated by the stippled area in FIG. 6B). Thus, the available WCDMA cell is found and selected after a period much shorter than needed by the usual procedures depicted in FIG. 5. Through the improved cell search method, the UE avoids searching GSM BG 2 and thus the UE obtains services faster than with the conventional method. In addition, the UE reduces its power consumption related to PLMN scan.

It will be appreciated that it is generally not necessary for the UE to have found a WCDMA cell at least once before, as it is enough for the UE to "know" that it can handle WCDMA, i.e., two or more RATs. Consider a new UE that is powered up for the first time, finds a cell in a first RAT, and then is powered off. If the second time the UE is powered up it cannot find a cell in the BG of the previously found RAT, and if the UE can also handle a second RAT, the UE can search preconfigured BGs in the second RAT. In another arrangement, the UE can be preconfigured with what will be considered as the most recently used BG(s) of a RAT or RATs, which can depend on where the UE was sold, for example.

It will also be appreciated that a UE can change RATs after searching one frequency group, or in general fewer than all frequency groups of a RAT. For example, a UE may search through the most recently used BG in RAT A, and then switch to RAT B and search through a most recently used or otherwise prioritized BG in RAT B. If a cell is not found in that BG of RAT B, the UE can switch back to RAT A and search through a second BG of RAT A. If a cell is not found in the second BG of RAT A, the UE may switch back to RAT B and search through a second BG of RAT A, and so on. A memory in the UE can maintain a list of frequency groups in virtually any desired order of search.

In this way, the PLMN search time is improved for relevant scenarios if the UE switches RAT after searching the most recently used frequency bands in one RAT. The expected improvement is valid as long as the UE remains in one geographic area, such as Europe or North America. It will be understood that if the UE moves between such geographic areas, the result of the improved method is increased search times rather than reduced ones, but these situations are less frequent and with lower priority compared to the situations where users benefit from the changed behavior.

It is expected that this invention can be implemented in a wide variety of environments, including for example mobile communication devices. It will be appreciated that procedures described above are carried out repetitively as necessary. To facilitate understanding, many aspects of the invention are described in terms of sequences of actions that can be performed by, for example, elements of a programmable computer system. It will be recognized that various actions could be performed by specialized circuits (e.g., discrete logic gates interconnected to perform a specialized function or application-specific integrated circuits), by program instructions executed by one or more processors, or by a combination of both. Many communication devices can easily carry out the computations and determinations described here with their programmable processors and application-specific integrated circuits.

Moreover, the invention described here can additionally be considered to be embodied entirely within any form of computer-readable storage medium having stored therein an appropriate set of instructions for use by or in connection with an instruction-execution system, apparatus, or device, such as a computer-based system, processor-containing system, or other system that can fetch instructions from a medium and execute the instructions. As used here, a "computer-readable medium" can be any means that can contain, store, communicate, propagate, or transport the program for use by or in connection with the instruction-execution system, apparatus, or device. The computer-readable medium can be, for example but not limited to, an electronic, magnetic, optical, electromagnetic, infrared, or semiconductor system, apparatus, device, or propagation medium. More specific examples (a non-exhaustive list) of the computer-readable medium include an electrical connection having one or more wires, a portable computer diskette, a RAM, a ROM, an erasable programmable read-only memory (EPROM or Flash memory), and an optical fiber.

Thus, the invention may be embodied in many different forms, not all of which are described above, and all such forms are contemplated to be within the scope of the invention. For each of the various aspects of the invention, any such form may be referred to as "logic configured to" perform a described action, or alternatively as "logic that" performs a described action.

It is emphasized that the terms "comprises" and "comprising", when used in this application, specify the presence of stated features, integers, steps, or components and do not preclude the presence or addition of one or more other features, integers, steps, components, or groups thereof.

The particular embodiments described above are merely illustrative and should not be considered restrictive in any way. The scope of the invention is determined by the following claims, and all variations and equivalents that fall within the range of the claims are intended to be embraced therein.

## Claims

1. A method in a user equipment UE of searching for a cell in a public land mobile network, comprising the steps of:
searching for a cell in the most recently used frequency group of a first radio access technology RAT; and
if a cell is not found in the most recently used frequency group of the first RAT, switching to a second RAT **characterized by,** after switching, searching for a cell in the most recently used frequency group of the second RAT.

2. The method of claim 1, further comprising the step of, if a cell is not found in the most recently used frequency group of the second RAT, switching back to the first RAT and searching for a cell in at least one remaining frequency group of the first RAT.

3. The method of claim 2, further comprising the steps of, if a cell is not found in a remaining frequency group of the first RAT, switching back to the second RAT and searching for a cell in at least one remaining frequency group of the second RAT.

4. The method of claim 1, wherein the most recently used frequency groups are indicated by information stored in the UE.

5. The method of claim 4, wherein the information is stored as a result of a power-down or before a loss of service of the UE.

6. A user equipment UE for a communication system, comprising:
means for selecting a radio access technology RAT to use for communicating with the communication system from at least two RATs; and
means for searching for a cell of the communication system using the selected RAT, wherein the searching means searches for a cell in the most recently used frequency group of a first RAT; and if a cell is not found in the most recently used frequency group of the first RAT, the searching means switches to a second RAT **characterized by,** after switching, searches for a cell in the most recently used frequency group of the second RAT.

7. The UE of claim 6, wherein if a cell is not found in the most recently used frequency group of the second RAT, the searching means switches back to the first RAT and searches for a cell in at least one remaining frequency group of the first RAT.

8. The UE of claim 7, wherein if a cell is not found in the remaining frequency groups of the first RAT, the searching means switches back to the second RAT and searches for a cell in at least one remaining frequency group of the second RAT.

9. The UE of claim 6, wherein at least one of the selecting means and the searching means includes a memory for storing an indication of the most recently used frequency groups.

10. The UE of claim 9, wherein the indication is stored as a result of a power-down or before a loss of service of the UE.

11. The UE of claim 6, wherein information transmitted from a cell to the UE enables the UE to select the communication system from a plurality of communication systems.

12. The UE of claim 6, wherein the communication system includes a plurality of cells, and each cell uses a respective RAT.

13. The UE of claim 12, wherein the RATs include second generation and third generation radio access technologies.

14. A computer-readable medium having stored thereon instructions which, when executed by a processor, cause the processor to perform a method of searching for a cell in a public land mobile network, the method comprising the steps of:
searching for a cell in the most recently used frequency group of a first radio access technology RAT; and
if a cell is not found in the most recently used frequency group of the first RAT, switching to a second RAT **characterized by,** after switching, searching for a cell in the most recently used frequency group of the second RAT.

15. The medium of claim 14, wherein the method further comprises the step of, if a cell is not found in the most recently used frequency group of the second RAT, switching back to the first RAT and searching for a cell in at least one remaining frequency group of the first RAT.

16. The medium of claim 15, wherein the method further comprises the steps of, if a cell is not found in the remaining frequency groups of the first RAT, switching back to the second RAT and searching for a cell in at least one remaining frequency group of the second RAT.

17. The medium of claim 14, wherein the most recently used frequency groups are indicated by stored information.

18. The medium of claim 17, wherein the information is stored as a result of a power-down or before a loss of service of the user equipment.

## Patentansprüche

1. Verfahren in einer Benutzereinrichtung UE zum Suchen einer Zelle in einem öffentlichen terrestrischen Mobilnetzwerk, welches die Schritte umfasst:
Suchen nach einer Zelle in der zuletzt genutzten Frequenzgruppe einer ersten Funkzugriffs-Technologie RAT; und
falls eine Zelle in der zuletzt genutzten Frequenzgruppe der ersten RAT nicht gefunden wird, Umschalten zu einer zweiten RAT, **dadurch gekennzeichnet, dass** nach dem Umschalten nach einer Zelle in der zuletzt genutzten Frequenzgruppe der zweite RAT gesucht wird.

2. Verfahren nach Anspruch 1, welches ferner den Schritt umfasst, dass falls eine Zelle in der zuletzt genutzten Frequenzgruppe der zweiten RAT nicht gefunden wird, zu der ersten RAT zurückgeschaltet wird und nach einer Zelle in wenigstens einer übrig gebliebenen Frequenzgruppe der ersten RAT gesucht wird.

3. Verfahren nach Anspruch 2, welches ferner die Schritte umfasst, dass falls eine Zelle in einer übrig gebliebenen Frequenzgruppe der ersten RAT nicht gefunden wird, zu einer zweiten RAT zurückgeschaltet wird und nach einer Zelle in wenigstens einer übrig gebliebenen Frequenzgruppe der zweiten RAT gesucht wird.

4. Verfahren nach Anspruch 1, wobei auf die zuletzt genutzten Frequenzgruppen durch in der UE gespeicherte Information hingewiesen wird.

5. Verfahren nach Anspruch 4, wobei die Information als Ergebnis eines Ausschaltens oder vor einem Verlust von Betriebsfähigkeit der UE gespeichert wird.

6. Benutzereinrichtung UE für ein Kommunikationssystem, welche umfasst:
Mittel zum Auswählen einer Funkzugriffs-Technologie RAT, welche genutzt wird, um mit dem Kommunikationssystem von wenigstens zwei RAT zu kommunizieren; und
Mittel zum Suchen nach einer Zelle des Kommunikationssystems unter Nutzung der ausgewählten RAT, wobei das Suchmittel nach einer Zelle in der zuletzt genutzten Frequenzgruppe einer ersten RAT sucht; und falls eine Zelle in der zuletzt genutzten Frequenzgruppe der ersten RAT nicht gefunden wird, schaltet das Suchmittel zu einer zweiten RAT um, **dadurch gekennzeichnet, dass** nach dem Umschalten nach einer Zelle in einer zuletzt genutzten Frequenzgruppe der zweiten RAT gesucht wird.

7. UE nach Anspruch 6, wobei, falls eine Zelle in der zuletzt genutzten Frequenzgruppe der zweiten RAT nicht gefunden wird, das Suchmittel zurück zu der ersten RAT schaltet und nach einer Zelle in wenigstens einer übrig gebliebenen Frequenzgruppe der ersten RAT sucht.

8. UE nach Anspruch 7, wobei, falls eine Zelle in den übrig gebliebenen Frequenzgruppen der ersten RAT nicht gefunden wird, das Suchmittel zurück zu der zweiten RAT schaltet und nach einer Zelle in wenigstens einer übrig gebliebenen Frequenzgruppe der zweiten RAT sucht.

9. UE nach Anspruch 6, wobei das Auswahlmittel und/oder das Suchmittel einen Speicher zum Speichern eines Hinweises auf die zuletzt genutzten Frequenzgruppen beinhaltet.

10. UE nach Anspruch 9, wobei der Hinweis als ein Ergebnis eines Ausschaltens oder vor einem Verlust von Betriebsfähigkeit der UE gespeichert wird.

11. UE nach Anspruch 6, wobei Information, welche von der Zelle an die UE gesendet wird, die UE dazu befähigt, das Kommunikationssystem aus einer Vielzahl von Kommunikationssystemen auszuwählen.

12. UE nach Anspruch 6, wobei das Kommunikationssystem eine Vielzahl von Zellen beinhaltet, und jede Zelle eine jeweilige RAT nutzt.

13. UE nach Anspruch 12, wobei die RAT Funkzugriffs-Technologien zweiter Generation und dritter Generation beinhalten.

14. Computer-lesbares Medium mit darauf gespeicherten Instruktionen, welche, wenn sie von einem Prozessor ausgeführt werden, den Prozessor dazu veranlassen, ein Verfahren zum Suchen nach einer Zelle in einem öffentlichen terrestrischen Mobilnetzwerk auszuführen, wobei das Verfahren die Schritte umfasst:
Suchen nach einer Zelle in der zuletzt genutzten Frequenzgruppe einer ersten Funkzugriffs-Technologie RAT; und
falls eine Zelle in der zuletzt genutzten Frequenzgruppe der ersten RAT nicht gefunden wird, Umschalten zu einer zweiten RAT, **dadurch gekennzeichnet, dass** nach dem Umschalten nach einer Zelle in der zuletzt genutzten Frequenzgruppe der zweiten RAT gesucht wird.

15. Medium nach Anspruch 14, wobei das Verfahren ferner den Schritt umfasst, dass falls eine Zelle in der zuletzt genutzten Frequenzgruppe der zweiten RAT nicht gefunden wird, zu der ersten RAT zurückgeschaltet wird und nach einer Zelle in wenigstens einer übrig gebliebenen Frequenzgruppe der ersten RAT gesucht wird.

16. Medium nach Anspruch 15, wobei das Verfahren ferner die Schritte umfasst, dass falls eine Zelle in den übrig gebliebenen Frequenzgruppen der ersten RAT nicht gefunden wird, zu einer zweiten RAT zurückgeschaltet wird und nach einer Zelle in wenigstens einer übrig gebliebenen Frequenzgruppe der zweiten RAT gesucht wird.

17. Medium nach Anspruch 14, wobei auf die zuletzt genutzten Frequenzgruppen durch gespeicherte Information hingewiesen wird.

18. Medium nach Anspruch 14, wobei die Information als ein Ergebnis eines Ausschaltens oder vor einem Verlust von Betriebsfähigkeit der Benutzereinrichtung gespeichert wird.

## Revendications

1. Procédé dans un équipement utilisateur UE destiné à chercher une cellule dans un réseau mobile terrestre public, comprenant les étapes qui consistent à :
chercher une cellule dans le groupe des fréquences les plus récemment utilisées d'une première technologie d'accès radio RAT ; et
si on ne trouve pas de cellule dans le groupe des fréquences les plus récemment utilisées de la première RAT, basculer vers une deuxième RAT, **caractérisé par**, après le basculement, le fait de chercher une cellule dans le groupe des fréquences les plus récemment utilisées de la deuxième RAT.

2. Procédé de la revendication 1, comprenant en outre l'étape qui consiste à revenir à la première RAT et chercher une cellule dans au moins un groupe de fréquences restantes de la première RAT, si on ne trouve pas de cellule dans le groupe des fréquences les plus récemment utilisées de la deuxième RAT.

3. Procédé de la revendication 2, comprenant en outre les étapes qui consistent à revenir à la deuxième RAT et chercher une cellule dans au moins un groupe de fréquences restantes dans la deuxième RAT, si on ne trouve pas de cellule dans un groupe de fréquences restantes de la première RAT.

4. Procédé de la revendication 1, dans lequel les groupes des fréquences les plus récemment utilisées sont indiqués par une information stockée dans l'UE.

5. Procédé de la revendication 4, dans lequel l'information est stockée suite à une coupure d'alimentation ou avant une perte de service de l'UE.

6. Equipement utilisateur UE pour un système de communication, comprenant:
un moyen destiné à sélectionner une technologie d'accès radio RAT à utiliser pour communiquer avec le système de communication à partir d'au moins deux RAT ; et
un moyen destiné à chercher une cellule du système de communication en utilisant la RAT sélectionnée, où le moyen de recherche cherche une cellule dans le groupe des fréquences les plus récemment utilisées d'une première RAT ; et si on ne trouve pas de cellule dans le groupe des fréquences les plus récemment utilisées de la première RAT, le moyen de recherche bascule vers une deuxième RAT, **caractérisé par** le fait de, après basculement, chercher une cellule dans le groupe des fréquences les plus récemment utilisées de la deuxième RAT.

7. UE de la revendication 6, dans lequel si on ne trouve pas de cellule dans le groupe des fréquences les plus récemment utilisées de la deuxième RAT, le moyen de recherche revient à la première RAT et cherche une cellule dans au moins un groupe de fréquences restantes de la première RAT.

8. UE de la revendication 7, dans lequel si on ne trouve pas de cellule dans les groupes de fréquences restantes de la première RAT, le moyen de recherche revient à la deuxième RAT et cherche une cellule dans au moins un groupe de fréquences restantes de la deuxième RAT.

9. UE de la revendication 6, dans lequel au moins l'un du moyen de sélection et du moyen de recherche comporte une mémoire destinée à stocker une indication des groupes de fréquences les plus récemment utilisées.

10. UE de la revendication 9, dans lequel l'indication est stockée suite à une coupure d'alimentation ou avant une perte de service de l'UE.

11. UE de la revendication 6, dans lequel une information transmise d'une cellule à l'UE permet à l'UE de sélectionner le système de communication entre plusieurs systèmes de communication.

12. UE de la revendication 6, dans lequel le système de communication comporte une pluralité de cellules, et chaque cellule utilise une RAT respective.

13. UE de la revendication 12, dans lequel les RAT comportent des technologies d'accès radio de deuxième et de troisième génération.

14. Support lisible par ordinateur sur lequel des instructions sont stockées, qui, lorsqu'elles sont exécutées par un processeur, amènent le processeur à mettre en oeuvre un procédé de recherche d'une cellule dans un réseau mobile terrestre public, le procédé comprenant les étapes qui consistent à:
chercher une cellule dans le groupe des fréquences les plus récemment utilisées d'une première technologie d'accès radio RAT ; et
si on ne trouve pas de cellule dans le groupe des fréquences les plus récemment utilisées de la première RAT, basculer vers une deuxième RAT, **caractérisé par**, après basculement, le fait de chercher une cellule dans le groupe des fréquences les plus récemment utilisées de la deuxième RAT.

15. Support de la revendication 14, dans lequel le procédé comprend en outre l'étape qui consiste à revenir à la première RAT et chercher une cellule dans au moins un groupe de fréquences restantes de la première RAT, si on ne trouve pas de cellule dans le groupe des fréquences les plus récemment utilisées de la deuxième RAT.

16. Support de la revendication 15, dans lequel le procédé comprend en outre l'étape qui consiste à revenir à la deuxième RAT et chercher une cellule dans au moins un groupe de fréquences restantes de la deuxième RAT, si on ne trouve pas de cellule dans les groupes de fréquences restantes de la première RAT.

17. Support de la revendication 14, dans lequel les groupes des fréquences les plus récemment utilisées sont indiqués par une information stockée.

18. Support de la revendication 17, dans lequel l'information est stockée suite à une coupure d'alimentation ou avant une perte de service de l'équipement utilisateur.
